# EUROPEAN PATENT APPLICATION

(11) **EP 4 742 732 A1**
(43) Date of publication of application: **13.05.2026**
(21) Application number: 23947878.7
(22) Date of filing: 04.08.2023
(51) Int. Cl.: H04W 24/02

(54) **INFORMATION TRANSMISSION METHOD, FIRST TERMINAL DEVICE, AND FIRST CORE NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: Mewburn Ellis LLP
(86) International application number: PCT/CN2023/111349
(87) International publication number: WO 2025/030295

(57) **Abstract**

The present application relates to an information transmission method, a first terminal device, a first core network device, a fourth access network device, a chip, a computer readable storage medium, a computer program product, a computer program, and a communication system. The information transmission method comprises: a first terminal device sends first model related information to a first network device, wherein the first model related information comprises first information related to an applicable condition of a first model in the first terminal device. According to embodiments of the present application, information related to an applicable condition of a model in a terminal device is reported or transmitted, so that a network device can obtain the related information of the applicable condition of the model, and the model can be managed on the basis of the related information of the applicable condition of the model, thereby optimizing the application of the model.

## Description

### TECHNICAL FIELD

The present application relates to the field of communications, and in particular, to an information transmission method, a first terminal device, a first core network device, a fourth access network device, a chip, a computer-readable storage medium, a computer program product, a computer program, and a communication system.

### BACKGROUND

With the further enhancement of requirements for flexibility, adaptability, system capacity and so on of wireless communication systems, the gain space that can be brought by wireless communication solutions based on conventional theories is gradually diminishing. By enabling a model to obtain reasoning or prediction capabilities through modeling and learning, and applying model-based solutions to wireless communication systems, performance bottlenecks can be overcome. Therefore, this approach is being increasingly applied to wireless communication systems; and it is necessary to consider how to manage the model.

### SUMMARY

The embodiments of the present application provide an information transmission method, and the method includes:
transmitting, by a first terminal device, first model-related information to a first network device, where the first model-related information includes first information related to an applicable condition of a first model in the first terminal device.

The embodiments of the present application provide an information transmission method, and the method includes:
receiving, by a first core network device, first model-related information transmitted by a first terminal device; where the first model-related information includes first information related to an applicable condition of a first model in the first terminal device.

The embodiments of the present application provide an information transmission method, and the method includes:
receiving, by a first core network device, fourth model-related information transmitted by a second access network device; where the fourth model-related information includes fifth information related to an applicable condition of a second model in a second terminal device.

The embodiments of the present application provide an information transmission method, and the method includes:
receiving, by a fourth access network device, first model-related information transmitted by a first terminal device; where the first model-related information includes first information related to an applicable condition of a first model in the first terminal device.

The embodiments of the present application provide an information transmission method, and the method includes:
receiving, by a fourth access network device, tenth model-related information transmitted by a fifth core network device; where the tenth model-related information includes sixth information related to an applicable condition of a third model in a third terminal device.

The embodiments of the present application provide a first terminal device, and the first terminal device includes:
a first communication module, configured to transmit first model-related information to a first network device, where the first model-related information includes first information related to an applicable condition of a first model in the first terminal device.

The embodiments of the present application provide a first core network device, and the first core network device includes:
a second communication module, configured to receive first model-related information transmitted by a first terminal device; where the first model-related information includes first information related to an applicable condition of a first model in the first terminal device.

The embodiments of the present application provide a first core network device, and the first core network device includes:
a third communication module, configured to receive fourth model-related information transmitted by a second access network device; where the fourth model-related information includes fifth information related to an applicable condition of a second model in a second terminal device.

The embodiments of the present application provide a fourth access network device, and the fourth access network device includes:
a fourth communication module, configured to receive first model-related information transmitted by a first terminal device; where the first model-related information includes first information related to an applicable condition of a first model in the first terminal device.

The embodiments of the present application provide a fourth access network device, and the fourth access network device includes:
a fifth communication module, configured to receive tenth model-related information transmitted by a fifth core network device; where the tenth model-related information includes sixth information related to an applicable condition of a third model in a third terminal device.

The embodiments of the present application provide a first terminal device, and the first terminal device includes: a transceiver, a processor and a memory. The memory is configured to store a computer program, the transceiver is configured to communicate with other devices, and the processor is configured to call the computer program stored in the memory and run the computer program, to cause the first terminal device to perform the information transmission method above.

The embodiments of the present application provide a first core network device, and the first core network device includes: a transceiver, a processor and a memory. The memory is configured to store a computer program, the transceiver is configured to communicate with other devices, and the processor is configured to call the computer program stored in the memory and run the computer program, to cause the first core network device to perform the information transmission methods above.

The embodiments of the present application provide a fourth access network device, and the fourth access network device includes: a transceiver, a processor and a memory. The memory is configured to store a computer program, the transceiver is configured to communicate with other devices, and the processor is configured to call the computer program stored in the memory and run the computer program, to cause the fourth access network device to perform the information transmission methods above.

The embodiments of the present application provide a chip for implementing the information transmission methods above.

Specifically, the chip includes: a processor, configured to call a computer program from a memory and run the computer program, to cause a device equipped with the chip to perform the information transmission methods above.

The embodiments of the present application provide a computer-readable storage medium, configured to store a computer program. The computer program, when executed by a device, causes the device to perform the information transmission methods above.

The embodiments of the present application provide a computer program product, including computer program instructions. The computer program instructions cause a computer to perform the information transmission methods above.

The embodiments of the present application provide a computer program which, when executed on a computer, causes the computer to perform the information transmission methods above.

The embodiments of the present application provide a communication system. The communication system includes a first terminal device and a first network device, which are configured to perform the information transmission methods above, where the first network device includes the first core network device and/or fourth access network device above.

In the embodiments of the present application, by reporting or transmitting the information related to the applicable condition of the model in the terminal device, the network device is enabled to obtain the related information of the applicable condition of the model, so that the model management can be performed according to the information related to the applicable condition of the model, thereby optimizing the application of the model.

### BRIEF DESCRIPTION OF THE DRAWINGS

FIG. 1 is a schematic diagram of an application scenario according to the embodiments of the present application.
FIG. 2 is a schematic flowchart of an information transmission method according to an embodiment of the present application.
FIG. 3 is a schematic flowchart of an information transmission method according to an application example of the present application.
FIG. 4 is a schematic flowchart of an information transmission method according to another embodiment of the present application.
FIG. 5 is a schematic flowchart of an information transmission method according to another embodiment of the present application.
FIG. 6 is a schematic flowchart of an information transmission method according to another embodiment of the present application.
FIG. 7 is a schematic flowchart of an information transmission method according to another embodiment of the present application.
FIG. 8 is a schematic block diagram of a first terminal device according to an embodiment of the present application.
FIG. 9 is a schematic block diagram of a first core network device according to an embodiment of the present application.
FIG. 10 is a schematic block diagram of a first core network device according to another embodiment of the present application.
FIG. 11 is a schematic block diagram of a fourth access network device according to an embodiment of the present application.
FIG. 12 is a schematic block diagram of a fourth access network device according to another embodiment of the present application.
FIG. 13 is a schematic block diagram of a communication device according to an embodiment of the present application.
FIG. 14 is a schematic block diagram of a chip according to an embodiment of the present application.
FIG. 15 is a schematic block diagram of a communication system according to an embodiment of the present application.

### DETAILED DESCRIPTION

Technical solutions in the embodiments of the present application will be described below in conjunction with accompanying drawings in the embodiments of the present application.

The technical solutions of the embodiments of the present application may be applied to various communication systems, such as a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLANs), wireless fidelity (WiFi), a 5th-generation (5G) communication system, a sixth-generation (6G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, worn or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured, large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In the embodiments of the present application, the network device may be a device used for communicating with a mobile device. The network device may be an access point (AP) in the WLAN, a relay station or an access point, or a vehicle-mounted device, a wearable device, a network device (gNB) in the NR network, a network device in the future evolved PLMN network, a network device in the NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, or other places.

In the embodiments of the present application, the network device may provide services for a cell, and the terminal device communicates with the network device through a transmission resource (e.g., a frequency domain resource, or in other words, a frequency spectrum resource) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have characteristics of small coverage range and low transmit power, which are applicable for providing a data transmission service with a high speed.

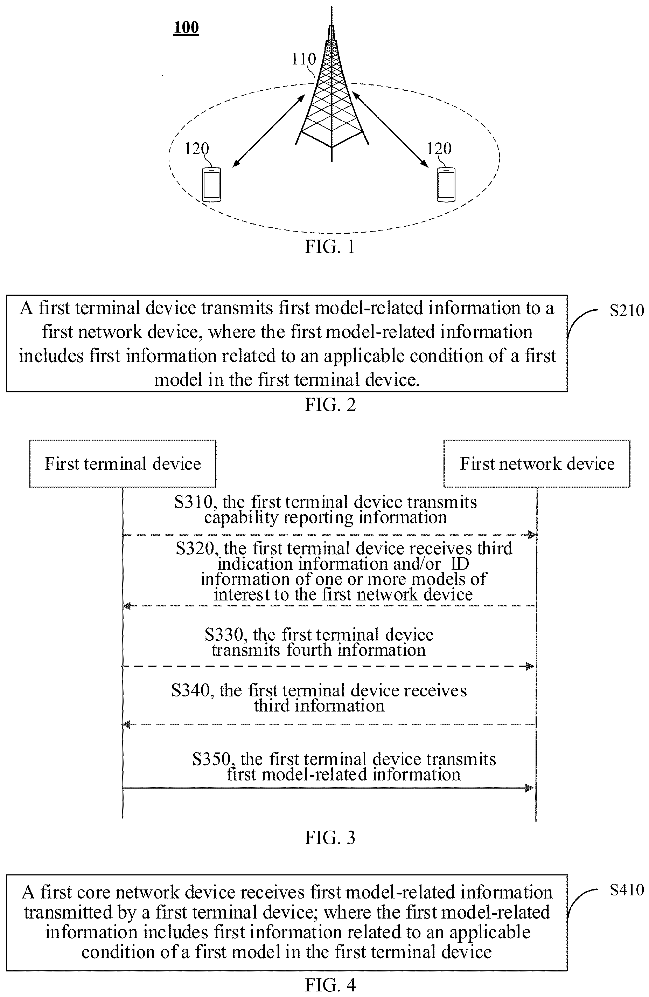

FIG. 1 exemplarily illustrates a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that related objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all falls within the protection scope of the embodiments of the present application.

### (1) Functional configuration process in 5G system

There are many functions in the 5G communication system, and some functions are mandatory functions for the 5G terminal, but most 5G functions are optional functions. The terminal can indicate which optional functions are supported through a capability reporting process. The network device configures appropriate configuration information for the terminal device according to capabilities reported by the terminal and functions supported by the network device itself.

Capability information reporting is mostly used to indicate relatively static capability information of the terminal device, and the terminal device may usually understand the meaning of the capability itself. However, for model description information associated with Artificial Intelligence (AI) models, the conventional capability reporting process cannot meet reporting requirements of the model description information.

### (2) Download of Over the top (OTT, third party provides services to users) service model

Due to the limited capabilities of the terminal device, models at the terminal device side are generally trained through a third-party platform (for example, an OTT service platform). The terminal device may download the required AI model and model description information associated with the model through an application layer.

In the function configuration process of the above 5G system, capability information reporting is mostly used to indicate relatively static capability information of the terminal device, and the terminal device may usually understand the meaning of the capability itself. However, for model description information associated with AI models, the conventional capability reporting process cannot meet the reporting requirements of the model description information because a lot of configuration information (for example, antenna size) of model training involves product implementation privacy and is generally not allowed to be expressed through a standardization process. However, as part of the model applicable condition, the network device wants to know the model description information associated with the model to facilitate model management (for example, model activation, deactivation, handover, or other operations). Therefore, how the terminal device reports the model description information containing implementation characteristics will be a key issue that needs to be solved in the present application.

FIG. 2 is a schematic flowchart of an information transmission method according to an embodiment of the present application. Optionally, the method may be applied to the system illustrated in FIG. 1, but is not limited thereto. The method includes at least part of the following content.

In S210, a first terminal device transmits first model-related information to a first network device, where the first model-related information includes first information related to an applicable condition of a first model in the first terminal device.

In the embodiments of the present application, the first terminal device may be any type of terminal device in which the first model is stored. The first model may be an AI-based model or a machine learning (ML)-based model, such as a deep learning neural network model. Optionally, the first model may be a model of any function, such as a channel state information (CSI) compression feedback model, a CSI prediction model, a beam prediction model, a positioning model, a mobility control model, a traffic prediction model, or a measurement prediction model.

Exemplarily, the first network device may include an access network device and/or a core network device.

Exemplarily, the access network device is any one of: a gNB, a centralized unit (CU), a distributed unit (DU), a centralized unit-control plane (CU-CP), or a centralized unit-user plane (CU-UP).

Exemplarily, the core network device is any one of: a location management function (LMF) network element, a network slice selection function (NSSF) network element, an authentication server function (AUSF) network element, a unified data management (UDM) network element, an access and mobility management function (AMF) network element, a session management function (SMF) network element, a policy control function (PCF) network element, a user plane function (UPF) network element, a sensing control function (Sensing Function, SF) network element, or a network data analytics function (NWDAF) network element.

In the embodiments of the present application, the first model-related information is used for describing the first model, and the first model-related information at least includes the first information related to the applicable condition of the first model. Optionally, the first model-related information may be carried by any of the following types of messages: an NR positioning protocol A (NRPPa) message, a long term evolution positioning protocol (LPP) message, an non-access stratum (NAS) message, a radio resource control (RRC) message, a media access control control element (MAC CE) message, an uplink control information (UCI) message, a physical uplink control channel (PUCCH) message, a physical uplink shared channel (PUSCH) message, an inter-node message, or an AI dedicated message.

Exemplarily, the first model-related information may be carried by a unicast message, a multicast message or a broadcast message. The unicast message (one-to-one) refers to a message transmitted by the first terminal device through a unicast channel, and only the first network device allocated with the corresponding unicast resource can attempt to receive the unicast message. The unicast message may also be referred to as dedicated signaling. The multicast message (one-to-many) refers to a message transmitted by the first terminal device through a multicast channel, and a terminal device or a network device that is a group member and within a coverage area of the multicast signal can attempt to receive the multicast message. When a terminal device or network device joins a group, it will obtain multicast channel-related resources. The broadcast message (one-to-any) refers to a message transmitted by the first terminal device through a broadcast channel, and any terminal device or network device within a coverage of a broadcast signal can attempt to receive the broadcast message.

Exemplarily, the first model-related information may be used for the first network device to configure other models related to the first model for the first terminal device, such as to configure a model with the same function as the first model but with different applicable conditions, to facilitate subsequent activation and use. Alternatively, the first model-related information may be used for the first network device to perform operations such as activation, deactivation, function fallback or handover for the first model. Specifically, the first network device may configure other models for the first terminal device according to the first information related to the applicable condition of the first model, or perform operations such as activation, deactivation, function fallback or handover for the first model.

As can be seen that the first terminal device reports the information related to the applicable condition of the first model in the first terminal device to the first network device according to the above method, the first network device is enabled to obtain the related information of the applicable condition of the first model, so as to manage the first model according to the related information of the applicable condition of the first model, such as perform operations such as activation, deactivation, function fallback or handover for the first model, thereby optimizing the application of the first model and improving the system performance.

In some embodiments, the first information related to the applicable condition of the first model may include one or more of the following categories of information.

First category of information: a device state to which the first model is applicable.

In some embodiments, the device state includes a speed of the first terminal device and/or location-related information of the first terminal device. In other words, the first information related to the applicable condition of the first model may include adaptation speed information and/or adaptation location-related information of the first model. Exemplarily, the adaptation location-related information may include geographic location or geographic area information.

### Regarding the adaptation speed information

For different speeds of a terminal device, the inference accuracy of a single model varies significantly (or in other words, the generalization performance of one version of the model for the speed of the terminal device is poor). In order to meet the requirements of the model inference accuracy of the first terminal device at different speed states, the first terminal device may self-configure, obtain from a third-party platform or configure based on the network multiple versions of models (i.e., multiple models) for the same function. Each version of the model is associated with one specific speed information. In this way, the first terminal device may determine which version of the model to use based on its actual speed information, to achieve a relatively high-precision inference state.

For example, the first model is used for beam time-domain measurement result prediction. The beam time-domain measurement result prediction function mainly utilizes historical measurement results of one or more beams at one or more past moments to infer beam measurement results at one or more future moments. It is assumed that there are four versions of the model implementing the beam time-domain measurement result prediction function, namely Model 1-1, Model 1-2, Model 1-3 and Model 1-4. The adaptation speed information associated with each version of the model is low speed, medium-low speed, medium-high speed and high speed, respectively. The meanings of low speed, medium-low speed, medium-high speed and high speed are agreed by system or predefined by protocols. For example, low speed refers to 0~3 km/h (kilometers/hour), and medium-low speed refers to 3~6 km/h. When the first terminal device determines that it is at low speed, Model 1-1 is used; and when the first terminal device determines that it is at high speed, Model 1-4 is used. The first terminal device may report the adaptation speed information of each model to the first network device through the first model-related information.

Based on this, if the first network device determines the surrounding environmental conditions (such as whether it is in a busy urban area or near a highway) based on historical experience, on the one hand, the adaptation speed information reported by the first terminal device may assist the first network device in determining whether to activate, deactivate or hand over the corresponding model (for example, the first terminal device reports that it has a model version adapted to low speed, and the receiving base station is surrounded by a busy urban area where terminal speeds are generally not too high; and after comprehensively determining this information, the first network device may determine to activate the model version adapted to low speed in the first terminal device). On the other hand, the first network device may also know whether the first terminal device lacks certain model versions based on this information, and thus configure the corresponding model version for the first terminal device (for example, the first terminal device reports that it has a model version adapted to low speed, and the receiving first network device is surrounded by highways where the terminal speeds are generally high; and after comprehensively determining this information, the first network device may determine to configure an additional model version adapted to high speed for the first terminal device, which is convenient for subsequent activation and use).

### Regarding the adaptation location-related information

The adaptation location-related information including geographical area information to which the model is applicable is taken as an example for explanation. For different geographical areas, the inference accuracy of a single model varies significantly (or in other words, the generalization performance of one version of the model for the geographical location is poor). In order to meet the requirements of the model inference accuracy of the first terminal device in different geographical area states, multiple versions of models applicable to the same function may be configured for the first terminal device. Each version of the model is associated with geographical area information to which the model is adapted. In this way, the first terminal device may determine which version of the model to use based on its actual geographical area, to achieve a relatively high-precision inference state. The geographic area information includes at least one of: longitude information, latitude information or altitude information.

For example, the first model is used for positioning inference. It is assumed that there are four versions of the model implementing the positioning inference function, namely Model 2-1, Model 2-2, Model 2-3 and Model 2-4. The adaptation geographical areas associated with each version of the model are geographical area 1, geographical area 2, geographical area 3 and geographical area 4, respectively (where the meanings of geographical area 1, geographical area 2, geographical area 3 and geographical area 4 are predefined by protocols, for example, geographical area 1 corresponds to the children's park area in City A, and geographical area 2 corresponds to the residential area in City A). Then, when the first terminal device determines that its location is in geographical area 1, Model 2-1 is used; and when the first terminal device determines that its location is in geographical area 4, Model 2-4 is used. The first terminal device may report the geographical area information to which each model is adapted to the first network device through the first model-related information.

Based on this, on the one hand, the first network device may determine whether to activate or deactivate or hand over the corresponding model at the first terminal device side based on the geographical area information to which the model is adapted reported by the first terminal device and the geographical area information in which the first network device itself is located. On the other hand, based on the geographical area information to which the model is adapted reported by the first terminal device, if the first network device finds that the first terminal device lacks a model version applicable to this area, the first network device may also additionally configure a model version applicable to this area for the first terminal device, to facilitate subsequent activation and use, so as to achieve the system performance improvement.

Second category of information: device information of a terminal device to which the first model is applicable.

In some embodiments, the device information of the terminal device to which the first model is applicable includes hardware information and/or software information of the terminal device.

The operating performance of the terminal device's model is significantly influenced by the hardware and/or software implementation of the terminal device itself. For example, regarding hardware, the same model may run on a large-memory terminal device but not on a small-memory terminal device, and may run on an 8-core CPU terminal device but not on a 4-core CPU terminal device. For another example, regarding software, the same model may be run on a terminal device installed with a first operating system but not on a terminal device installed with a second operating system. Similarly, factors that influence the model operation also include the size, distribution or the like of antenna of the terminal devices. Specifically, there are many more hardware and/or software factors that actually influence the operating performance of the terminal device's model. Since these factors are related to the product implementation of each manufacturer, it is impossible to list them all here.

According to the embodiments of the present application, the first terminal device may report the hardware information and/or software information to which the first model is applicable through the first model-related information. It should be understood that the hardware information here refers to information characterizing a specific hardware, which may, for example, be identification information (such as type, configuration, version, ID, size) of the specific hardware, or a character string or an information container associated with the specific hardware. Similarly, the software information refers to information characterizing a specific software configuration (such as an operating system, or an algorithm type), which may, for example, be identification information (such as type, ID, version number) of the specific software configuration, or a character string or an information container associated with the specific software configuration.

Based on this, the first network device may perform management operations related to the first model based on the device information reported by the first terminal device, such as downloading other models that match the above hardware information and/or software information, assisting in determination of operations such as activation/deactivation/handover of the first model, thereby improving the system performance. It should be emphasized that although the first network device may not be able to specifically understand the actual meaning represented by the second category of information (that is, it is unable to understand the hardware and/or software implementation configuration of the first terminal device), the first network device may still use the reported second category of information to perform information matching operation, such as, activating the first model when the second category of information is successfully matched, and deactivating or not activating the first model when the second category of information is unsuccessfully matched.

Third category of information: applicable condition information related to an implementation of the first model.

In some embodiments, the implementation of the first model may include a training manner of the first model. The applicable condition information related to the implementation of the first model may be used to characterize detailed information of the training manner, such as the platform type, algorithm type, training configuration information, terminal device type considered during training used for the first model training. Optionally, the applicable condition information may be the detailed information of the training method itself, or other information used to characterize the detailed information of the training manner, such as a character string or an information container associated with the detailed information.

According to the embodiments of the present application, the first terminal device may report the applicable condition information related to the implementation of the first model through the first model-related information. Based on this, the first network device may implement management operations related to the first model based on the applicable condition information related to the implementation of the first model, such as model download requirement matching, auxiliary model activation/deactivation/handover determination or other operations, thereby improving the system performance.

Fourth category of information: configuration information to which the first model is applicable.

In some embodiments, the configuration information includes one or more of: measurement configuration information, logical area configuration information, or frequency domain resource configuration information. It should be noted that the first model is applicable to a certain configuration information, which means that the first model may work with high precision only in the configuration environment associated with the configuration information.

### Regarding the measurement configuration information

Exemplarily, the measurement configuration information includes one or more of the following:
synchronization signal/PBCH block (SSB) resource configuration information, CSI-reference signal (CSI-RS) resource configuration information, sounding reference signal (SRS) resource configuration information, or positioning reference signal (PRS) resource configuration information.

Optionally, the resource configuration information in the measurement configuration information may include configuration information of one or more of time domain resources, frequency domain resources or spatial domain resources.

For example, the first model-related information reported by the first terminal device includes the CSI-RS resource configuration information to which the first model is applicable, but at this time, the first network device has configured another set of CSI-RS resource configuration for the first terminal device, so the first model associated with the first model-related information should not be activated to use.

Regarding the logical area configuration information.

Exemplarily, the logical area configuration information includes one or more of the following:
public land mobile network (PLMN) identity information, closed access group (CAG) identity information, stand-alone non-public networks (SNPN) identity information, tracking area code (TAC) identity information, RAN area code (RANAC) identity information, model effective use area dedicated identity information, or cell identity information. Optionally, the cell identity information is represented by a cell global identity (CGI) or a cell index. Alternatively, the cell identity information is represented in the form of a combination of a physical cell identity (PCI) and a frequency point.

For example, if the cell identity information included in the first model-related information reported by the first terminal device is frequency point 1 and PCI 1, but the first network device is a cell corresponding to frequency point 2 and PCI 2, in this case, the first model associated with frequency point 1 the PCI 1 should not be activated to use.

Regarding the frequency domain resource configuration information.

Exemplarily, the frequency domain resource configuration information includes one or more of the following:
frequency point identity information, frequency band identity information, or frequency band combination identity information.

For example, the first model-related information reported by the terminal device includes frequency band 1 identity information, but the frequency band used by the first network device is frequency band 2 (for example, indicated by frequency band 2 identity information), in this case, the model associated with the first model-related information should not be activated to use.

By reporting the above fourth category of information, on the one hand, the first network device may determine whether to activate or deactivate or hand over the corresponding model at the first terminal device side based on the configuration information to which the model is applicable reported by the first terminal device and the configuration information of the first network device itself. On the other hand, based on the configuration information to which the model is applicable reported by the first terminal device, if the first network device finds that the first terminal device lacks model versions applicable to certain configurations, the first network device may also additionally configure model versions applicable to these configurations for the first terminal device, to facilitate subsequent activation and use, so as to achieve the system performance improvement.

Fifth category of information: device information of a network device to which the first model is applicable.

In some embodiments, the device information of the network device to which the first model is applicable includes hardware information and/or software information of the network device.

Exemplarily, the hardware information refers to information characterizing a specific hardware, which may, for example, be identification information (such as type, configuration, version, ID, size) of the specific hardware, or a character string or an information container associated with the specific hardware. Similarly, the software information refers to information characterizing a specific software configuration (such as an operating system, or an algorithm type), which may, for example, be the identification information (such as type, ID, version number) of the specific software configuration, or a character string or an information container associated with the specific software configuration.

Generally speaking, the information covered by the hardware and/or software of the network device is quite broad, such as, the size, shape or distribution of antennas deployed by the network device, the beamforming algorithm, the mapping relationship between beam directions and antenna ports, the number or distribution of antenna ports, Layer 1 filtering algorithms, the geographical distribution of transmission and reception points(TRPs). These hardware/software configurations are closely related to the operating performance of the model. The same model may achieve good model inference accuracy under the management of the adapted network device. Conversely, the inference performance of the same model will be severely degraded under the management of the inappropriate network device. By reporting the above fifth category of information, the first network device may determine whether the first model currently deployed by the first terminal device is suitable for activation to use, so as to implement management operations related to the model, such as model download requirement matching, auxiliary model activation/deactivation/handover determination or other operations, thereby improving the system performance.

Sixth category of information: network deployment information to which the first model is applicable.

The network deployment information may also be understood as scenario information to which the first model is applicable. Exemplarily, the scenario information is used to indicate a base station deployment scenario.

Exemplarily, the network deployment information may be used to indicate one or more of the following scenarios:
Indoor hotspot (InH);
Indoor factory (InF);
Urban macro (UMa);
Urban micro (UMi); or
Rural macro (RMa).

Some models have poor generalization and is only associated with one base station deployment scenario, such as, Model A is associated with InF scenario. Some models have good generalization and may be associated with multiple base station deployment scenarios, such as, Model B is associated with UMa and UMi scenarios. By reporting the sixth category of information, the first network device may determine whether the first model is suitable for the current network deployment scenario, so as to implement management operations related to the model, such as model download requirement matching, auxiliary model activation/deactivation/handover or other operations, thereby improving the system performance.

Optionally, in another implementation, the fifth category of information and the sixth category of information may be combined into one category of information to report.

Seventh category of information: input data requirement information to which the first model is applicable.

Model training requires datasets, and different models trained on datasets with different features are obviously applicable to different datasets (or in other words, a model can only operate with high precision in the corresponding training dataset environment). Therefore, reporting the seventh category of information may allow the first network device to clearly know the dataset condition to which the first model is applicable, so that the first network device may adapt the model-related configuration and activate the first model for use. Alternatively, when the dataset condition does not match its own configuration, the model is not activated, deactivated, or handed over.

Optionally, in another implementation, the third category of information and the seventh category of information may be combined into one category of information to report.

It should be noted that the first information related to the applicable condition of the first model may include any one or any multiple categories of information in the first to seventh categories of information. For example, the first information may include the measurement configuration information to which the first model is applicable and the scenario information to which the first model is applicable. The first network device may determine whether the first model is suitable for activation and use based on the current measurement configuration and the deployment scenario of the first network device. In actual applications, the content of the first information may be set according to the scenario requirements, system agreements or protocol definitions, which will not be exhaustively listed here.

In some embodiments, one or more categories of information in the first information are character strings. Specifically, one or more categories of information in the first information are character strings associated with the information, and these character strings may be used for matching or filtering of information, or may be used for information parsing by a specific device to assist the first network device in model management and control.

Exemplarily, one or more of the second category of information, the third category of information, the fifth category of information, the sixth category of information and the seventh category of information in the first information are character strings. For example, the device information of the terminal device to which the first model is applicable is a first character string, the applicable condition information related to the implementation of the first model is a second character string, the device information of the network device to which the first model is applicable is a third character string, the network deployment information to which the first model is applicable is a fourth character string, and the input data requirement information to which the first model is applicable is a fifth character string. In another implementation, the one or more categories of information mentioned above may also be represented by one character string, where different parts of the character string represent different categories of information.

Taking the second category of information (the device information of the terminal device to which the first model is applicable) included in the first information as an example, the network device generally does not need to understand the device information of the terminal device to which the first model is applicable. Furthermore, the specific meaning of the hardware and/or software implementation characteristics at the terminal device side cannot be expressed in the form of a specific parameter list. On the one hand, this involves commercial confidentiality and is unwilling to be expressed in detail. On the other hand, there are too many hardware and/or software factors, which are difficult to explain and express in detail. However, the implementation characteristic information is crucial for the use and sharing of terminal-side models. Assuming that a terminal device needs to download a terminal-side model uploaded and shared by another terminal device from a network device, the terminal device needs to provide information that can characterize its hardware and/or software implementation characteristics. In this way, the network device can find a terminal-side model that matches these characteristics based on the hardware and/or software implementation characteristic information and configure the terminal-side model to the terminal device.

For example, manufacturer A expresses the hardware and/or software implementation characteristics of the X3 mobile phone with the character string 'aa', expresses the hardware and/or software implementation characteristics of the X4 mobile phone with the character string 'ab', and expresses the hardware and/or software implementation characteristics of the X5 mobile phone with the character string 'ac'; while manufacturer B expresses the hardware and/or software implementation characteristics of the i8 mobile phone with the character string 'kkq', expresses the hardware and/or software implementation characteristics of the i9 mobile phone with the character string 'kkw', and expresses the hardware and/or software implementation characteristics of the i10 mobile phone with the character string 'kke'.

In exemplary scenario 1, the second terminal device in the communication system is an X5 mobile terminal, and the second terminal reports the character string 'ac' when requesting to download a model from the first network device. If the first terminal device (such as another X5 mobile terminal) has also reported the character string 'ac' when reporting the first model-related information, the first network device may configure the first model associated with the character string 'ac' for the second terminal device.

In exemplary scenario 2, the first terminal device is an X5 mobile terminal. The X5 mobile terminal already has a corresponding terminal-side model, and uploads the character string 'ac' along with the associated model to the network device, to implement a model sharing mechanism between terminal devices through the network device. The character string 'ac' information may be served as one of the bases for the network device to perform model matching and screening.

In exemplary scenario 3, the first terminal device is an X5 mobile terminal. The X5 mobile terminal already has a corresponding terminal-side model, and reports the character string 'ac' information associated with the model to the first network device. Although the first network device cannot understand the actual meaning represented by the character string, the first network device knows, based on the historical practical experience, that the second terminal device corresponding to the character string 'ac' can operate the model in the current configuration environment, and therefore, activates the corresponding model for the second terminal device.

It can be seen that in a case where the second category of information is a character string, the hardware and/or software implementation characteristics of the first terminal device may be hidden from the first network device to protect user privacy, and the first network device is enabled to use the character string associated with the hardware and/or software implementation characteristics of the first terminal device to implement the management operations related to the model.

Taking the third category of information (the applicable condition information related to the implementation of the first model) included in the first information as an example, if the first model is trained by a third-party platform (terminal device or cloud service provider), the first network device generally does not need to understand the specific meaning expressed by the third category of information; and if the first model is trained by a third-party platform (network device or cloud service provider), the first terminal device also generally does not need to understand the specific meaning expressed by the third category of information.

A large number of AI models used by the terminal device are not always trained by the terminal device itself. Many terminal device-side models are downloaded from the cloud service provider or network device. If the terminal-side model is trained by the third-party manufacturer such as the cloud service provider or network manufacturer, for the sake of commercial confidentiality protection, the third-party manufacturer does not want the terminal device to know the details of the model training, such as, the platform type used for model training, the algorithm type used for model training (such as neural network or fully connected network), which terminal device configuration information is used for model training, which terminal device types are considered for model training. Although the specific meaning of the model implementation information cannot be expressed via parameters (due to commercial privacy protection), the information is crucial for the normal use of the model, and the third category of information may serve as one of the important bases for model request or screening process. Under one usage scenario, the third party will provide the third category of information (character strings) to the first terminal device when providing a model to the first terminal device; and after accessing a cell, the first terminal device may report the third category of information to the first network device in the service cell. The first network device may perform matching operation based on the third category of information, for example, if the manufacturer to which the service cell belongs happens to be the network manufacturer that trained the first model associated with the third category of information, the first network device may consider activating the first model. In another usage scenario, the first model is trained by the cloud service provider and provided to the terminal device, along with the third category of information associated with the first model. Since the cloud service provider has signed cooperation agreements with several network manufacturers or operators (the network manufacturers or operators will maintain a list of valid third-party third-category of information), after the first terminal device reports the third category of information to the first network device, the first network device may determine whether the first model associated with the third category of information is a model permitted for use under the cooperation agreements based on the third category of information reported by the first terminal device and the locally maintained list of third category of information, thereby determining whether the first model is suitable for use in the current network.

For example, the cloud service provider has trained a beam measurement result time-domain prediction model for the first terminal device and assigned a model implementation character string "www" (i.e., the third category of information) to the model. The first terminal device may report the character string "www" to the first network device. Under a scenario, the first terminal device may request the first network device to download other models associated with the character string "www". In another scenario, the first network device may query the local database based on the character string "www" to determine whether the model associated with the information can be used. If so, the first network device transmits a model activation command to the first terminal device.

It can be seen that when the third category of information is in the form of a character string, the details of model training may be hidden from the first terminal device and/or the first network device to protect the privacy of the model developer, and the first network device is also enabled to use the character string associated with the implementation of the first model to implement the management operations related to the model.

Taking the fifth category of information (the device information of the network device to which the first model is applicable) included in the first information as an example, the first terminal device generally cannot understand the actual meaning expressed by the fifth category of information because it involves much commercial information of the network manufacturers. Although the actual meaning of the fifth category of information cannot be understood by the first terminal device, as part of the model applicable conditions, the model provider (cloud service provider or network manufacturer or operator) may also provide the character string information corresponding to the fifth category of information along with the model itself, to the first terminal device when providing the AI model to the first terminal device. After accessing a cell, the first terminal device may report the character string information associated with the model to the first network device in the cell, enabling the first network device to determine whether the model currently deployed on the terminal device is suitable for activation and use based on this information.

It can be seen that when the fifth category of information is in the form of a character string, the network manufacturer's information may be hidden from the first terminal device to protect the privacy of the network manufacturer. The first network device is also enabled to use the character string associated with the device information of the network device used by the first model to implement the management operations related to the model. The first network device may understand the actual meaning of the character string information corresponding to the fifth category of information (for example, the network device is the corresponding model provider) or the first network device cannot understand the actual meaning of the character string information corresponding to the fifth category of information (for example, the network device is a cooperative user of the corresponding model provider).

Taking the sixth category of information (the network deployment information to which the first model is applicable) included in the first information as an example, the first terminal device generally cannot understand the actual meaning of the sixth category of information. However, by using a character string associated with the network deployment scenario to which the first model is applicable as the sixth category of information for reporting, the first network device may use the character string to implement the management operations related to the model.

In some embodiments, the fifth category of information and the sixth category of information may be combined into one category of information to report, because neither the fifth category of information nor the sixth category of information requires the terminal device to understand, and combined reporting may simplify the design of reporting information. In other embodiments, the fifth category of information and the sixth category of information may be reported separately, which provides more flexibility for network device implementation without combining the two categories of information for implementation.

In some embodiments, one or more categories of information in the first information are carried by an information container. The information carried by the information container may only be parsed by a specific device, and one or more nodes on the transmission link may not be able to parse the information in the information container. That is, the first terminal device or the first network device does not need to understand the actual meaning of the information carried by the information container, which may be implemented in a manner similar to the application of the character strings above-mentioned, and achieve effects comparable to those of the above character string manner, which will not be repeated here.

It should be noted that if a character string is reported, although the first network device cannot understand the specific meaning, it may still parse and obtain the reported character string information. For example, after X5 reports the second category of information, the network device parses and obtains the character string "ac". If the container information is reported, the network device may neither understand the specific meaning nor obtain the character string information, and all it gets is a computer bit sequence, such as "010010101". However, regardless of whether it is a character string or an information container, the network device may save the received information and use the information to perform logical screening or matching.

Exemplarily, one or more of the second category of information, the third category of information, the fifth category of information, the sixth category of information and the seventh category of information in the first information are carried by an information container. For example, the device information of the terminal device to which the first model is applicable is carried by a first information container, the applicable condition information related to the implementation of the first model is carried by a second information container, the device information of the network device to which the first model is applicable is carried by a third information container, the network deployment information to which the first model is applicable is carried by a fourth information container, and the input data requirement information to which the first model is applicable is carried by a fifth information container. In another implementation, the above one or more categories of information may also be carried by one information container, where different parts in one information container bearer represent different categories of information.

It is understandable that, regardless of whether it is a character string or an information container, the specific meaning of such information does not need to be discussed in detail at the standard level. For example, the standard level does not need to specifically define how many parameters are included in each type of character string identity information or the container information. The implementation of the character string identity information or container information not only simplifies the workload of standardization discussions, but also leaves flexibility for development and implementation, and the engineering implementation has good scalability.

In some embodiments, the first model-related information further includes second information, and the second information includes one or more of:
an identifier (ID) of the first model;
type information of an input parameter of the first model;
type information of an output parameter of the first model; or
functional information of the first model.

In an implementation, the ID information of the first model includes one parameter. In this case, the ID information of the first model is used to identify a type of models (this type of models performs the same function) or to identify a specific model. For example, there may be multiple physical models for performing beam time-domain measurement result prediction, some of which are suitable for high-speed terminal states, some for low-speed terminal states, some for high-frequency scenarios, and some for low-frequency scenarios. Although the applicable conditions of the specific models are different, the type of models is all used to perform the beam time-domain measurement result prediction function. These physical models that perform the same function are referred to as a type of models. If the ID information of the first model may clearly point to a physical model under a specific condition for a given function, and the ID information of the first model is used to identify a specific model. The former manner (that is, the ID information of the first model is used to identify a type of models) allows that the network device does not need to know exactly how many physical models of the same function the terminal device maintains. The network device management is simple because it only needs to consider which function's to activate, and the determination of which specific physical model under that function should be activated can be left for terminal device to select or hand over according to the actual situation. The latter manner (that is, the ID information of the first model is used to identify a specific model) allows that the network device has greater control over model management. The network device may comprehensively determine which specific model under this function should be activated or handed over in the current situation, avoiding the situation where the specific model activated after the terminal device's autonomous determination does not match the network device configuration. Certainly, in this way, the terminal device is relatively simple to implement, because the terminal device only needs to activate which specific model under this function according to the instruction of the network device, and the terminal device does not need to make autonomous determination and decisions.

In another implementation, the ID information of the first model includes two parameters (represented by parameter 1 and parameter 2), where parameter 1 is used to identify the model type, that is, to identify one type of models (the type of models performs the same function), and parameter 2 is used to point to a specific model. For example, parameter 1 takes the value of 'A' and is used to represent models that perform beam time-domain measurement result prediction (a type of models), while parameter 2 takes the values of '00', '01', '10' and '11', where '00' represents a model working at low frequency and low speed, '01' represents a model working at low frequency and high speed, '10' represents a model working at high frequency and low speed, and '11' represents a model working at high frequency and high speed. The combination of parameters 1 and 2 may uniquely determine a specific model. Parameter 1 used alone may only represent a type of models with the same function. This manner is more flexible, allowing for the reporting of parameter 1 alone or both parameters 1 and 2 according to different requirements.

Optionally, regardless of which of the above implementations, all or part of the information included in the ID information of the first model is obtained by a predefined manner, a network configuration manner, or a custom manner. If the ID information of the first model includes multiple sub-information, the acquisition manners of the multiple sub-information may be the same or different.

Exemplarily, if the ID of the first model itself has a deterministic association relationship with the type information of the input parameter and the type information of the output parameter, that is, the type information of the model input parameter and the type information of the model output parameter may be obtained through the ID of the first model (for example, confirmed via a default mapping relationship), then the second information may include the ID of the first model, or include the ID and the functional information of the first model. That is, the second information may not include the type information of the model input parameter and the type information of the model output parameter. Similarly, if the ID of the first model itself has a deterministic association relationship with the functional information of the first model, the second information may include the ID of the first model, or include the ID, the type information of the input parameter and the type information of the output parameter of the first model, but does not include the functional information of the first model. If the ID of the first model may confirm the type information of the input parameter of the first model, the type information of the output parameter of the first model, and the function information of the first model via a default association relationship, the second information only needs to include the ID of the first model.

Exemplarily, the functional information of the first model represents the specific function applied by the first model. For example, for the CSI function, the applicable functional information may be used to distinguish different functional branches of the CSI function, for example, distinguishing the CSI compression feedback function and the CSI time domain prediction function; for the beam function, the applicable functional information may be used to distinguish different functional branches of the beam function, for example, distinguishing the beam measurement result spatial-domain prediction function and the beam measurement result time-domain prediction function; for the positioning function, the applicable functional information may be used to distinguish different functional branches of the positioning function, for example, distinguishing the terminal device directly participating in the positioning function and the terminal device indirectly participating in the positioning function.

By setting the above second information in the first model-related information, the first network device is enabled to obtain comprehensive model description information or manage and maintain the corresponding first model-related information based on the model identifier, thereby facilitating the management operations on the first model and improving the system performance.

In some embodiments, the above information transmission method may further include the following.

The first terminal device receives third information transmitted by the first network device; where the third information includes:
one or more model IDs corresponding to the first model-related information requested to be obtained by the first network device; and/or
first indication information, the first indication information being used to request the first terminal device to transmit the first model-related information.

Exemplarily, the third information includes the first indication information but does not include the above one or more model IDs. The first terminal device may report the first model-related information based on the models stored by itself or the states of updated model.

Exemplarily, the third information includes the first indication information and the one or more model IDs corresponding to the first model-related information requested to be obtained by the first network device. The one or more models corresponding to the first model-related information requested to be obtained by the first network device are one or more models of interest to the first network device. The third information includes the one or more model IDs, so as to constraint the scope of models involved by the first model-related information reported by the first terminal device. Exemplarily, the one or more model IDs corresponding to the first model-related information reported by the first terminal device are a subset of the one or more model IDs included in the third information.

Exemplarily, the third information includes the above one or more model IDs, but does not include the first indication information. The identity information of one or more models of interest to the first network device implicitly the meaning of requesting for the first terminal device to transmit the first model-related information.

Optionally, the step of receiving the third information may be performed before the first terminal device transmits the first model-related information to the first network device.

In some embodiments, the information transmission method further includes that the first terminal device transmits fourth information to the first network device; where the fourth information includes one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

Exemplarily, the fourth information may include the second indication information to trigger the first network device to transmit the third information, so as to report the first model-related information based on the third information.

Exemplarily, the fourth information may include the second indication information, and also include the one or more model IDs stored by the first terminal device or the one or more model IDs updated by the first terminal device, so that the first network device may determine the model ID of interest to the network device from the one or more model IDs stored or updated by the first terminal device.

Exemplarily, the fourth information may include one or more model IDs stored by the first terminal device or one or more model IDs updated by the first terminal device, but does not include the second indication information. The ID of the model implicitly indicates that the first terminal device contains the first model-related information to be reported, or that the first model-related information has been updated.

Optionally, the above step of transmitting the fourth information may be performed before the first terminal device transmits the first model-related information to the first network device. Optionally, in an embodiment including the transmission of the third information, the above step of transmitting the fourth information may also be performed before the first terminal device receives the third information.

In some embodiments, the information transmission method may include a first configuration process for first model-related information. Exemplarily, the first configuration process may include at least one of:
the first terminal device transmitting the fourth information to the first network device;
   or
the first terminal device receiving the third information transmitted by the first network device.

Optionally, the first configuration process is a dynamic configuration process (or called a timely instruction process). Exemplarily, the dynamic configuration process may be a configuration process that is performed separately for each transmission of the first model-related information.

In some embodiments, the above information transmission method may further include the following.

The first terminal device receives third indication information transmitted by the first network device and/or ID information of one or more models of interest to the first network device transmitted by the first network device (i.e., the one or more model IDs corresponding to the first model-related information requested to be obtained by the first network device), where the third indication information is used to indicate whether the first terminal device is allowed to transmit the first model-related information, and the ID information of one or more models of interest to the first network device is used for indicating a model ID range corresponding to the first model-related information expected to be transmitted.

By setting the third indication information, the first terminal device triggers, when allowed, the transmission of the first model-related information, so that the first network device may control the transmission of the first model-related information, which is conducive to controlling the transmission resource overhead.

In some embodiments, the above information transmission method may further include that the first terminal device transmits capability reporting information to the first network device; where the capability reporting information includes:
whether the first terminal device supports transmitting the first model-related information; and/or
one or more model IDs corresponding to the first model-related information that the first terminal device supports transmitting.

Through the capability reporting process, the first network device is enabled to control the transmission of the first model-related information according to the capability of the first terminal device.

In some embodiments, the information transmission method may include a second configuration process for the first model-related information. Exemplarily, the second configuration process may include at least one of:
the first terminal device transmitting the capability reporting information to the first network device; or
the first terminal device receiving the third indication information transmitted by the first network device and/or the ID information of one or more models of interest to the first network device transmitted by the first network device.

Optionally, the second configuration process is a semi-static configuration process (the configuration included in the semi-static configuration process can be updated through a reconfiguration process). Exemplarily, the semi-static configuration process may be a configuration process pre-performed for multiple transmissions of first model-related information.

In some embodiments, the information transmission method may include the above first configuration process and second configuration process. Optionally, the first configuration process and the second configuration process may perform different transmission controls. For example, the first network device may transmit the one or more model IDs of interest to the first network device to the first terminal device during the second configuration process; thereafter, for a certain model-related information reporting, the first network device may transmit the third information during the first configuration process, where the third information carries the first indication information, to trigger the first terminal device to perform the reporting of the first model-related information. For another example, the first network device may transmit the third indication information to the first terminal device during the second configuration process to indicate that the first terminal device is allowed to transmit the first model-related information; thereafter, for a certain model-related information reporting, the first network device may transmit the third information during the first configuration process, where the third information carries the one or more model IDs of interest to the first network device, to control the model ID range involved in this model-related information reporting process.

To facilitate understanding of the above technical solutions, FIG. 3 illustrates a schematic diagram of an information transmission method in an application example. Steps S310 to S340 are optional rather than mandatory. As illustrated in FIG. 3, the information transmission method may include the following steps.

In S310, a first terminal device transmits capability reporting information to a first network device.

In S320, the first terminal device receives third indication information transmitted by the first network device and/or ID information of one or more models of interest to the first network device transmitted by the first network device; where the third indication information is used to indicate whether the first terminal device is allowed to transmit first model-related information.

In S330, the first terminal device transmits fourth information to the first network device; where the fourth information includes one or more of: one or more model IDs stored by the first terminal device; one or more model IDs updated by the first terminal device; or second indication information, the second indication information being used to indicate that the first terminal device contains first model-related information to be reported, or that the first model-related information has been updated.

In S340, the first terminal device receives third information transmitted by the first network device; where the third information includes: one or more model IDs corresponding to the first model-related information requested to be obtained by the first network device; and/or first indication information, the first indication information being used to request the first terminal device to transmit the first model-related information.

In S350, the first terminal device transmits the first model-related information to the first network device.

Step S310 to step S340 are optional rather than mandatory; and in actual application, they can be set according to different scenario requirements or system agreements.

According to the above embodiment of the present application, the definition of the first model-related information (i.e., model applicable condition information) avoids the disclosure of privatization project implementation information. The performance of the model is influenced by many factors. Some information may be disclosed to the terminal device (such as reference signal configuration), and some cannot be disclosed to the terminal device (for example, the size or shape of the antenna deployed by the network device, the beamforming algorithm, the mapping relationship between the beams and the antenna ports). By defining the first model-related information with a certain degree of vagueness (leaving a certain space for implementation), the implementation-related information may be avoided being disclosed to the terminal device or the network device, thereby protecting the engineering implementation privacy of the terminal device side, the model developer or the network device side to a certain extent.

As described above, the first network device may include a core network device or an access network device. Accordingly, the embodiments of the present application further provide an information transmission method performed by the core network device or the access network device. FIG. 4 is a schematic flowchart of an information transmission method according to an embodiment of the present application. Optionally, the method may be applied to the system illustrated in FIG. 1, but is not limited thereto. The method includes the following contents.

In S410, a first core network device receives first model-related information transmitted by a first terminal device; where the first model-related information includes first information related to an applicable condition of a first model in the first terminal device.

In some embodiments, the first information includes one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

The contents and application manners of the first information may refer to the corresponding description of the above embodiments, which will not be repeated here.

In some embodiments, one or more categories of information in the first information are character strings. For example, the device information of the terminal device to which the first model is applicable is a first character string, and/or the applicable condition information related to the implementation of the first model is a second character string, and/or the device information of the network device to which the first model is applicable is a third character string, and/or the network deployment information to which the first model is applicable is a fourth character string, and/or the input data requirement information to which the first model is applicable is a fifth character string.

In some embodiments, one or more categories of information in the first information are carried by an information container. For example, the device information of the terminal device to which the first model is applicable is carried by a first information container, and/or the applicable condition information related to the implementation of the first model is carried by a second information container, and/or the device information of the network device to which the first model is applicable is carried by a third information container, and/or the network deployment information to which the first model is applicable is carried by a fourth information container, and/or the input data requirement information to which the first model is applicable is carried by a fifth information container.

In some embodiments, the first model-related information further includes second information, where the second information includes one or more of:
an identifier (ID) of the first model;
type information of an input parameter of the first model;
type information of an output parameter of the first model; or
functional information of the first model.

In some embodiments, the information transmission method further includes that the first core network device transmits third information to the first terminal device; where the third information includes:
one or more model IDs corresponding to the first model-related information requested to be obtained by the first core network device; and/or
first indication information, the first indication information being used to request the first terminal device to transmit the first model-related information.

In some embodiments, the information transmission method further includes that the first core network device receives fourth information transmitted by the first terminal device; where the fourth information includes one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

In some embodiments, the information transmission method further includes that the first core network device transmits third indication information and/or ID information of one or more models of interest to the first core network device to the first terminal device, where the third indication information is used to indicate whether the first terminal device is allowed to transmit the first model-related information.

In some embodiments, the information transmission method further includes that the first core network device receives capability reporting information transmitted by the first terminal device; where the capability reporting information includes:
whether the first terminal device supports transmitting the first model-related information; and/or
one or more model IDs corresponding to the first model-related information that the first terminal device supports transmitting.

The capability reporting information, the third indication information, the fourth information and the third information may be implemented according to the corresponding description in the above embodiments, which will not be repeated here.

Optionally, the complete set or a subset of the first model information may be transmitted between the core network device and the access network device, or between core network devices.

Specifically, in some embodiments, the information transmission method further includes that the first core network device transmits second model-related information to a first access network device; where the second model-related information includes a subset of the first model-related information.

Specifically, the second model-related information may include the first model-related information, or include a subset consisting of partial information of the first model-related information. That is, the second model-related information may include all or part of the first model-related information. For example, if the first model-related information includes the configuration information, IDs and functional information applicable to the first model, the second model-related information may include the configuration information, IDs and functional information applicable to the first model, or include the configuration information and IDs applicable to the first model, or include the first model-related information corresponding to part of the IDs.

According to the present embodiment, the first model-related information is stored in the first core network device and transmitted from the first core network device to the first access network device, enabling the first access network device to perform the management operations, such as model activation, deactivation, handover or other operations. In this way, the first terminal device does not need to report the first model-related information to the first access network device every time it enters the connected state, which saves the information reporting overhead.

In some embodiments, the information transmission method may further include that the first core network device transmits third model-related information to a second core network device; where the third model-related information includes a subset of the first model-related information.

Specifically, the third model-related information may include the first model-related information, or include a subset consisting of partial information of the first model-related information. That is, the third model-related information may include all or part of the first model-related information.

Optionally, the third model-related information may be the same as or different from the second model-related information. For example, the first model-related information includes the configuration information, IDs and functional information applicable to the first model, and the second model-related information transmitted by the first core network device to the first access network device includes the configuration information and IDs applicable to the first model, then the third model-related information transmitted by the first core network device to the second core network device may include the configuration information, IDs and functional information applicable to the first model, or include the configuration information and IDs applicable to the first model.

According to the above embodiment, when the serving core network device of the first terminal device changes (for example, the core network device is replaced due to the mobility of the first terminal device), the continuity of model-related information maintenance may be preserved through information interaction between the source core network device and the target core network device. This avoids the first terminal device reporting the model-related information again due to the replacement of the core network device, thereby saving the information reporting overhead.

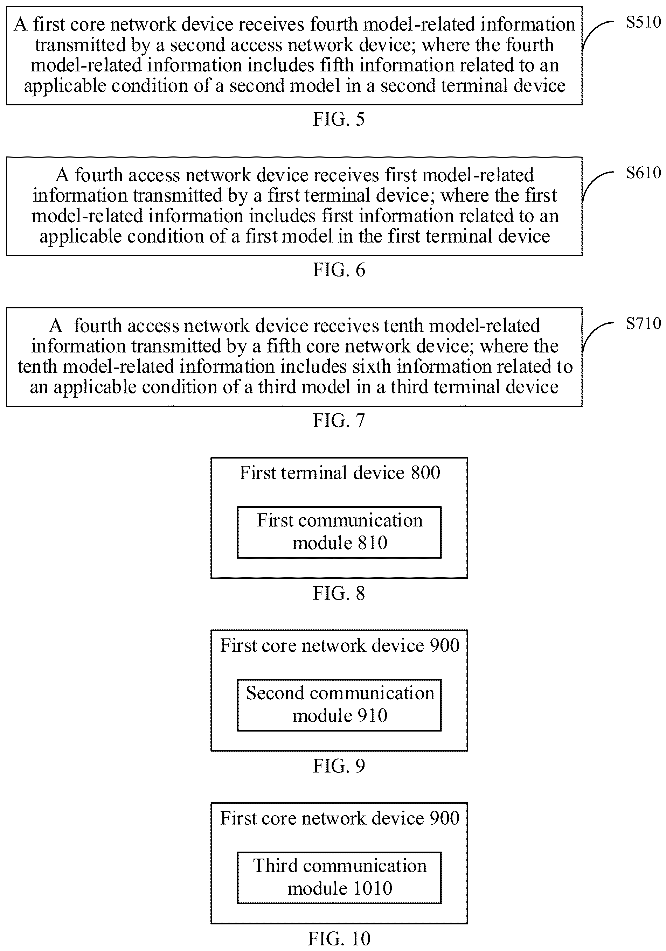

In some embodiments, the core network device may also receive model-related information transmitted by the access network device. Specifically, FIG. 5 is a schematic flowchart of an information transmission method according to an embodiment of the present application. The method includes the following contents.

In S510, a first core network device receives fourth model-related information transmitted by a second access network device; where the fourth model-related information includes fifth information related to an applicable condition of a second model in a second terminal device.

Exemplarily, the fourth model-related information may be determined based on the model-related information transmitted by the second terminal device and received by the second access network device, for example, the fourth model-related information is a subset of the model-related information transmitted by the second terminal device (including all or part of the model-related information).

Although the access network device will delete the context of the terminal device after leaving the connected state, if the second access network device transmits all or part of the model-related information obtained by the second access network device to the first core network device before releasing the second terminal device back to the idle state or inactive state, this information will be saved by the first core network device and will be re-transmitted from the first core network device to the access network device for use when the second terminal device enters the connected state next time, and the terminal device does not need to report the first model-related information to the access network device every time it enters the connected state, thereby saving the information reporting overhead.

In some embodiments, the fifth information includes one or more of:
a device state to which the second model is applicable;
device information of a terminal device to which the second model is applicable;
applicable condition information related to an implementation of the second model;
configuration information to which the second model is applicable;
device information of a network device to which the second model is applicable;
network deployment information to which the second model is applicable; or
input data requirement information to which the second model is applicable.

The contents and application manners of the fifth information may be implemented similarly by referring to the corresponding description of the first information in the above embodiments, which will not be repeated here.

In some embodiments, one or more categories of information in the fifth information are character strings. For example, the device information of the terminal device to which the second model is applicable is a sixth character string, and/or the applicable condition information related to the implementation of the second model is a seventh character string, and/or the device information of the network device to which the second model is applicable is an eighth character string, and/or the network deployment information to which the second model is applicable is a ninth character string, and/or the input data requirement information to which the first model is applicable is a tenth character string.

In some embodiments, one or more categories of information in the fifth information are carried by an information container. For example, the device information of the terminal device to which the second model is applicable is carried by a sixth information container, and/or the applicable condition information related to the implementation of the second model is carried by a seventh information container, and/or the device information of the network device to which the second model is applicable is carried by an eighth information container, and/or the network deployment information to which the second model is applicable is carried by a ninth information container, and/or, the input data requirement information to which the first model is applicable is carried by a tenth information container.

In some embodiments, the second model-related information further includes seventh information, and the seventh information includes one or more of:
an identifier (ID) of the second model;
type information of an input parameter of the second model;
type information of an output parameter of the second model; or
functional information of the second model.

It may be understood that the above embodiments may be implemented in combination without mutual contradiction. For example, the first core network device may receive the first model-related information transmitted by the first terminal device, and may also receive the fourth model-related information transmitted by the second access network device.

In some embodiments, the information transmission method may further include that the first core network device transmits fifth model-related information to a third access network device; where the fifth model-related information includes a subset of the fourth model-related information.

The third access network device and the second access network device may be the same device or different devices.

Specifically, for the fourth model-related information received from the second access network device, in a case where the second terminal device accesses the second access network device again after leaving the connected state, or in a case where the second terminal device accesses other access network devices after performing cell handover or cell reselection, the first core network device may transmit all or part of the fourth model-related information to the second access network device or other access network devices. In this way, when the second terminal device accesses the second access network device after leaving the connected state, or when the second terminal device accesses other access network devices after performing cell handover or cell reselection, there is no need to report the model-related information to the access network device again, thereby saving the information reporting overhead.

In some embodiments, the information transmission method may further include that the first core network device transmits sixth model-related information to a third core network device; where the sixth model-related information includes a subset of the fourth model-related information.

That is, for the fourth model-related information obtained from the access network device, the first core network device may also transmit the complete set or a subset of the fourth model-related information to other core network devices. In this way, when the serving core network device of the second terminal device changes (for example, the core network device is replaced due to the mobility of the second terminal device), the continuity of model-related information maintenance of the second terminal device may be preserved through information interaction between the source core network device and the target core network device. This avoids the second terminal device reporting the model-related information again due to the replacement of the core network device, thereby saving the information reporting overhead.

The embodiments of the present application further provide an information transmission method performed by an access network device. FIG. 6 is a schematic flowchart of an information transmission method according to an embodiment of the present application. Optionally, the method may be applied to the system illustrated in FIG. 1, but is not limited thereto. The method includes at least part of the following contents.

In S610, a fourth access network device receives first model-related information transmitted by a first terminal device; where the first model-related information includes first information related to an applicable condition of a first model in the first terminal device.

In some embodiments, the first information includes one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

The contents and application manners of the first information may refer to the corresponding description of the above embodiments, which will not be repeated here.

In some embodiments, one or more categories of information in the first information are character strings. For example, the device information of the terminal device to which the first model is applicable is a first character string, and/or the applicable condition information related to the implementation of the first model is a second character string, and/or the device information of the network device to which the first model is applicable is a third character string, and/or the network deployment information to which the first model is applicable is a fourth character string, and/or the input data requirement information to which the first model is applicable is a fifth character string.

In some embodiments, one or more categories of information in the first information are carried by an information container. For example, the device information of the terminal device to which the first model is applicable is carried by a first information container, and/or the applicable condition information related to the implementation of the first model is carried by a second information container, and/or the device information of the network device to which the first model is applicable is carried by a third information container, and/or the network deployment information to which the first model is applicable is carried by a fourth information container, and/or the input data requirement information to which the first model is applicable is carried by a fifth information container.

In some embodiments, the first model-related information further includes second information, where the second information includes one or more of:
an identifier (ID) of the first model;
type information of an input parameter of the first model;
type information of an output parameter of the first model; or
functional information of the first model.

In some embodiments, the information transmission method further includes that the fourth access network device transmits third information to the first terminal device; where the third information includes:
one or more model IDs corresponding to the first model-related information requested to be obtained by the fourth access network device; and/or
first indication information, the first indication information being used to request the first terminal device to transmit the first model-related information.

In some embodiments, the information transmission method further includes that the fourth access network device receives fourth information transmitted by the first terminal device; where the fourth information includes one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

In some embodiments, the information transmission method further includes that the fourth access network device transmits third indication information and/or ID information of one or more models of interest to the fourth access network device to the first terminal device, where the third indication information is used to indicate whether the first terminal device is allowed to transmit the first model-related information.

In some embodiments, the information transmission method further includes that the fourth access network device receives capability reporting information transmitted by the first terminal device; where the capability reporting information includes:
whether the first terminal device supports transmitting the first model-related information; and/or
one or more model IDs corresponding to the first model-related information that the first terminal device supports transmitting.

The capability reporting information, the third indication information, the fourth information and the third information may be implemented according to the corresponding description in the above embodiments, which will not be repeated here.

In some embodiments, the fourth access network device may also perform activation/deactivation/handover operations on the first model in the first terminal device based on the first model-related information, or configure other models related to the first model for the first terminal device.

In some embodiments, the information transmission method may further include that the fourth access network device transmits seventh model-related information to a fourth core network device; where the seventh model-related information includes a subset of the first model-related information.

For example, the fourth access network device may perform the operation before the first terminal device switches to an idle state or an inactive state. That is, before releasing the first terminal device back to the idle state or inactive state, the fourth access network device will transmit all or part of the obtained first model-related information to the fourth core network device. This information is saved by the fourth core network device and will be re-transmitted from the fourth core network device to the access network device for use when the first terminal device enters the connected state next time. The first terminal device does not need to report the first model-related information to the access network device every time it enters the connected state, thereby saving the information reporting overhead.

In some embodiments, the above information transmission method may further include that the fourth access network device or other access network devices receive(s) eighth model-related information transmitted by the fourth core network device; where the eighth model-related information includes a subset of the seventh model-related information. Optionally, the fourth access network device may receive the eighth model-related information from the fourth core network device when the first terminal device enters the connected state again.

In some embodiments, the above information transmission method may further include that the fourth access network device transmits ninth model-related information to a fifth access network device; where the ninth model-related information includes a subset of the first model-related information and/or a subset of the eighth model-related information.

That is, the model-related information may also be transmitted between two access network devices. When the serving access network device of the terminal device changes (for example, the access network device is replaced due to the mobility of the terminal device), the continuity of model-related information maintenance may be preserved through information interaction between the source access network device and the target access network device. This avoids the terminal device reporting the model-related information again due to the replacement of the access network device, thereby saving the information reporting overhead.

FIG. 7 is a schematic flowchart of an information transmission method according to an embodiment of the present application. Optionally, the method may be applied to the system illustrated in FIG. 1, but is not limited thereto. The method includes at least part of the following contents.

In S710, a fourth access network device receives tenth model-related information transmitted by a fifth core network device; where the tenth model-related information includes sixth information related to an applicable condition of a third model in a third terminal device.

Exemplarily, the tenth model-related information may be determined based on the model-related information transmitted by the third terminal device and received by the fifth core network device, for example, the tenth model-related information is a subset of the model-related information transmitted by the third terminal device (including all or part of the model-related information).

That is, the third terminal device transmits model-related information to the core network device, and the model-related information of the third terminal device is saved at the core network device. The terminal device does not need to report the first model-related information to the access network device every time it enters the connected state, thereby saving the information reporting overhead.

Exemplarily, the fourth access network device may perform model management operations based on the tenth model-related information, including activation/deactivation/handover processing for the third model in the third terminal device, and/or configuring other models related to the third model for the third terminal device.

In some embodiments, the method may further include that the fourth access network device transmits eleventh model-related information to a sixth access network device; where the eleventh model-related information includes a subset of the tenth model-related information.

That is, for the tenth model-related information received from the core network device, the fourth access network device may also transmit all or part of the tenth model-related information to the sixth access network device. For example, the fourth access network device is a source access network device when the serving access network device of the third terminal device changes, and the sixth access network device is a target access network device when the serving access network device of the third terminal device changes. The continuity of model-related information maintenance is preserved through information interaction between the source access network device and the target access network device. This avoids the terminal device reporting the model-related information again due to the replacement of the access network device, thereby saving the information reporting overhead.

It can be seen that according to the embodiments of the present application, the complete set or a subset of model-related information reported by the terminal device may be transmitted between access network devices, between the access network device and the core network device, and between core network devices. The continuity of model-related information maintenance is preserved to avoid the terminal device reporting the first model-related information each time it changes cells or areas, thereby saving the system information reporting overhead.

FIG. 8 is a schematic block diagram of a first terminal device 800 according to an embodiment of the present application. The first terminal device 800 may include:
a first communication module 810, configured to transmit first model-related information to a first network device, where the first model-related information includes first information related to an applicable condition of a first model in the first terminal device.

In an implementation, the first information includes one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

In an implementation, one or more categories of information in the first information are character strings.

In an implementation, one or more categories of information in the first information are carried by an information container.

In an implementation, the device state includes a speed of the first terminal device and/or location-related information of the first terminal device.

In an implementation, the device information of the terminal device to which the first model is applicable includes hardware information and/or software information of the terminal device.

In an implementation, the configuration information includes one or more of: measurement configuration information, logical area configuration information, or frequency domain resource configuration information.

In an implementation, the device information of the network device to which the first model is applicable includes hardware information and/or software information of the network device.

In an implementation, the first model-related information further includes second information, and the second information includes one or more of:
an identifier (ID) of the first model;
type information of an input parameter of the first model;
type information of an output parameter of the first model; or
functional information of the first model.

In an implementation, the first communication module 810 is further configured to receive third information transmitted by the first network device; and the third information includes:
one or more model IDs corresponding to the first model-related information requested to be obtained by the first network device; and/or
first indication information, the first indication information being used to request the first terminal device to transmit the first model-related information.

In an implementation, the first communication module 810 is further configured to transmit fourth information to the first network device; and the fourth information includes one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

In an implementation, the first communication module 810 is further configured to receive third indication information transmitted by the first network device and/or ID information of one or more models of interest to the first network device transmitted by the first network device, and the third indication information is used to indicate whether the first terminal device is allowed to transmit the first model-related information, and the ID information of one or more models of interest to the first network device is used to constrain the model ID range corresponding to the reported first model-related information.

In an implementation, the first communication module 810 is further configured to transmit capability reporting information to the first network device; and the capability reporting information includes:
whether the first terminal device supports transmitting the first model-related information; and/or
one or more model IDs corresponding to the first model-related information that the first terminal device supports transmitting.

The first terminal device 800 in the embodiments of the present application is capable of implementing the corresponding functions of the first terminal device in the above method embodiments. The processes, functions, implementations and beneficial effects corresponding to various modules (sub-modules, units, components, or the like) in the first terminal device 800 may refer to the corresponding description in the above method embodiments, and will not be repeated here. It should be noted that the functions described with respect to the various modules (sub-modules, units, components, or the like) in the first terminal device 800 in the embodiment of the present application may be implemented by different modules (sub-modules, units, components, or the like) or by the same module (sub-module, unit, component, or the like).

FIG. 9 is a schematic block diagram of a first core network device 900 according to an embodiment of the present application. The first core network device 900 may include:
a second communication module 910, configured to receive first model-related information transmitted by the first terminal device, where the first model-related information includes first information related to an applicable condition of a first model in the first terminal device.

In an implementation, the first information includes one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

In an implementation, one or more categories of information in the first information are character strings.

In an implementation, one or more categories of information in the first information are carried by an information container.

In an implementation, the second communication module 910 is further configured to:
transmit second model-related information to a first access network device; and the second model-related information includes a subset of the first model-related information.

In an implementation, the second communication module 910 is further configured to:
transmit third model-related information to a second core network device; and the third model-related information includes a subset of the first model-related information.

The first core network device 900 in the embodiments of the present application is capable of implementing the corresponding functions of the network device in the above method embodiments. The processes, functions, implementations and beneficial effects corresponding to various modules (sub-modules, units, components, or the like) in the first core network device 900 may refer to the corresponding description in the above method embodiments, and will not be repeated here. It should be noted that the functions described with respect to the various modules (sub-modules, units, components, or the like) in the first core network device 900 in the embodiments of the present application may be implemented by different modules (sub-modules, units, components, or the like) or by the same module (sub-module, unit, component, or the like).

FIG. 10 is a schematic block diagram of a first core network device 900 according to an embodiment of the present application. The first core network device 900 may include:
a third communication module 1010, configured to receive fourth model-related information transmitted by a second access network device; where the fourth model-related information includes fifth information related to an applicable condition of a second model in a second terminal device.

In an implementation, the third communication module 1010 is further configured to:
transmit fifth model-related information to a third access network device; and the fifth model-related information includes a subset of the fourth model-related information.

In an implementation, the third communication module 1010 is further configured to:
transmit sixth model-related information to a third core network device; and the sixth model-related information includes a subset of the fourth model-related information.

The first core network device 900 in the embodiments of the present application is capable of implementing the corresponding functions of the network device in the above method embodiments. The processes, functions, implementations and beneficial effects corresponding to various modules (sub-modules, units, components, or the like) in the first core network device 900 may refer to the corresponding description in the above method embodiments, and will not be repeated here. It should be noted that the functions described with respect to the various modules (sub-modules, units, components, or the like) in the first core network device 900 in the embodiments of the present application may be implemented by different modules (sub-modules, units, components, or the like) or by the same module (sub-module, unit, component, or the like).

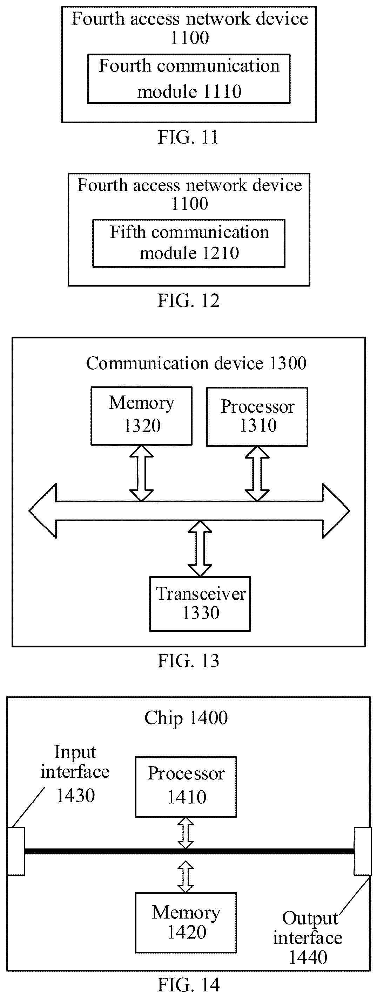

FIG. 11 is a schematic block diagram of a fourth access network device 1100 according to an embodiment of the present application. The fourth access network device 1100 may include:
a fourth communication module 1110, configured to receive first model-related information transmitted by a first terminal device; where the first model-related information includes first information related to an applicable condition of a first model in the first terminal device.

In an implementation, the first information includes one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

In an implementation, one or more categories of information in the first information are character strings.

In an implementation, one or more categories of information in the first information are carried by an information container.

In an implementation, the fourth communication module 1110 is further configured to:
transmit seventh model-related information to a fourth core network device; and the seventh model-related information includes a subset of the first model-related information.

In an implementation, the fourth communication module 1110 is further configured to:
receive eighth model-related information transmitted by the fourth core network device; and the eighth model-related information includes a subset of the seventh model-related information.

In an implementation, the fourth communication module 1110 is further configured to:
transmit ninth model-related information to a fifth access network device; and the ninth model-related information includes a subset of the first model-related information and/or a subset of the eighth model-related information.

The fourth access network device 1100 in the embodiments of the present application is capable of implementing the corresponding functions of the network device in the above method embodiments. The processes, functions, implementations and beneficial effects corresponding to various modules (sub-modules, units, components, or the like) in the fourth access network device 1100 may refer to the corresponding description in the above method embodiments, and will not be repeated here. It should be noted that the functions described with respect to the various modules (sub-modules, units, components, or the like) in the fourth access network device 1100 in the embodiments of the present application may be implemented by (sub-modules, units, components, or the like) or by the same module (sub-module, unit, component, or the like).

FIG. 12 is a schematic block diagram of a fourth access network device 1100 according to an embodiment of the present application. The fourth access network device 1100 may include:
a fifth communication module 1210, configured to receive tenth model-related information transmitted by a fifth core network device; where the tenth model-related information includes sixth information related to an applicable condition of a third model in a third terminal device.

In an implementation, the fifth communication module 1210 is further configured to:
transmit eleventh model-related information to a sixth access network device; and the eleventh model-related information includes a subset of the tenth model-related information.

The fourth access network device 1100 in the embodiments of the present application is capable of implementing the corresponding functions of the network device in the above method embodiments. The processes, functions, implementations and beneficial effects corresponding to various modules (sub-modules, units, components, or the like) in the fourth access network device 1100 may refer to the corresponding description in the above method embodiments, and will not be repeated here. It should be noted that the functions described with respect to the various modules (sub-modules, units, components, or the like) in the fourth access network device 1100 in the embodiments of the present application may be implemented by (sub-modules, units, components, or the like) or by the same module (sub-module, unit, component, or the like).

FIG. 13 is a schematic structural diagram of a communication device 1300 according to the embodiments of the present application. The communication device 1300 includes a processor 1310, and the processor 1310 may call a computer program from a memory and run the computer program, to cause the communication device 1300 to implement the methods in the embodiments of the present application.

In an implementation, the communication device 1300 may further include a memory 1320. The processor 1310 may call a computer program from the memory 1320 and run the computer program, to cause the communication device 1300 to implement the methods in the embodiments of the present application.

The memory 1320 may be a separate device independent of the processor 1310, or may be integrated into the processor 1310.

In an implementation, the communication device 1300 may further include a transceiver 1330, and the processor 1310 may control the transceiver 1330 to communicate with other devices, and specifically, to transmit information or data to other devices, or receive information or data transmitted by other devices.

The transceiver 1330 may include a transmitter and a receiver. The transceiver 1330 may further include antenna(s), and the number of antennas may be one or more.

In an implementation, the communication device 1300 may be the first terminal device of the embodiments of the present application, and the communication device 1300 may implement the corresponding procedures implemented by the first terminal device in the various methods of the embodiments of the present application, which will not be repeated here for brevity.

In an implementation, the communication device 1300 may be the first core network device of the embodiments of the present application, and the communication device 1300 may implement the corresponding procedures implemented by the first core network device in the various methods of the embodiments of the present application, which will not be repeated here for brevity.

In an implementation, the communication device 1300 may be the fourth access network device of the embodiments of the present application, and the communication device 1300 may implement the corresponding procedures implemented by the fourth access network device in the various methods of the embodiments of the present application, which will not be repeated here for brevity.

FIG. 14 is a schematic structural diagram of a chip 1400 according to the embodiments of the present application. The chip 1400 includes a processor 1410, and the processor 1410 may call a computer program from a memory and run the computer program, to implement the methods in the embodiments of the present application.

In an implementation, the chip 1400 may further include a memory 1420. The processor 1410 may call a computer program from the memory 1420 and run the computer program, to implement the methods performed by the terminal device or network device in the embodiments of the present application.

The memory 1420 may be a separate device independent from the processor 1410, or may be integrated into the processor 1410.

In an implementation, the chip 1400 may further include an input interface 1430. The processor 1410 may control the input interface 1430 to communicate with other devices or chips, and specifically, the input interface 1430 may obtain information or data transmitted by other devices or chips.

In an implementation, the chip 1400 may further include an output interface 1440. The processor 1410 may control the output interface 1440 to communicate with other devices or chips, and specifically, the output interface 1440 may output information or data to other devices or chips.

In an implementation, the chip may be applied to the first terminal device in the embodiments of the present application, and the chip may implement the corresponding procedures implemented by the first terminal device in the various methods of the embodiments of the present application, which will not be repeated here for brevity.

In an implementation, the chip may be applied to the first core network device in the embodiments of the present application, and the chip may implement the corresponding procedures implemented by the first core network device in the various methods of the embodiments of the present application, which will not be repeated here for brevity.

In an implementation, the chip may be applied to the fourth access network device in the embodiments of the present application, and the chip may implement the corresponding procedures implemented by the fourth access network device in the various methods of the embodiments of the present application, which will not be repeated here for brevity.

The chips used in the first terminal device, the first core network device and the fourth access network device may be the same chip or different chips.

It should be understood that the chip mentioned in the embodiments of the present application may also be referred to as a system on chip, a system chip, a chip system or a system-on-chip chip, or the like.

The above processor may be a general-purpose processor, a digital signal processor (DSP), a field programmable gate array (FPGA), an application specific integrated circuit (ASIC) or other programmable logic devices, transistor logic devices, discrete hardware components, or the like. The general-purpose processor mentioned above may be a microprocessor, or any conventional processor, or the like.

The above memory may be a volatile (transitory) memory or a non-volatile (non-transitory) memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above memory is exemplary but not limiting illustration, for example, the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

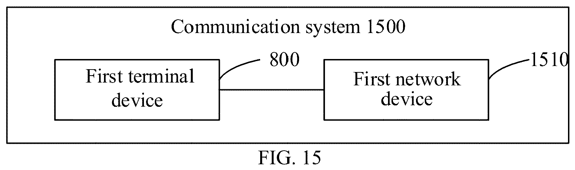

FIG. 15 is a schematic block diagram of a communication system 1500 according to the embodiments of the present application. The communication system 1500 includes a first terminal device 800 and a first network device 1510. The first terminal device 800 transmits first model-related information to the first network device 1510, where the first model-related information includes first information related to an applicable condition of a first model in the first terminal device 800. The first network device 1510 receives the first model-related information, and determines the applicable condition of the first model in the first terminal device 800 according to the first information in the first model-related information.

In some embodiments, the first network device 1510 includes a first core network device 900.

Optionally, the first core network device 900 receives the first model-related information transmitted by the first terminal device 800; where the first model-related information includes the first information related to the applicable condition of the first model in the first terminal device 800.

Optionally, the first core network device 900 receives fourth model-related information transmitted by a second access network device; where the fourth model-related information includes fifth information related to an applicable condition of a second model in a second terminal device.

In some embodiments, the first network device 1510 includes a fourth access network device 1100.

Optionally, the fourth access network device 1100 receives the first model-related information transmitted by the first terminal device 800; where the first model-related information includes the first information related to the applicable condition of the first model in the first terminal device 800.

Optionally, the fourth access network device 1100 receives tenth model-related information transmitted by a fifth core network device; where the tenth model-related information includes sixth information related to an applicable condition of a third model in a third terminal device.

The first terminal device 800 may be configured to implement the corresponding functions implemented by the first terminal device in the above methods, and the first core network device 900 may be configured to implement the corresponding functions implemented by the first core network device in the above methods, and the fourth access network device 1100 may be configured to implement the corresponding functions implemented by the fourth access network device in the above methods, which will not be repeated here for brevity.

The above embodiments may be implemented in whole or in part through software, hardware, firmware, or any combination thereof. When implemented by using software, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable devices. The computer instructions may be stored in a computer-readable storage medium or transmitted from one computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It can be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. An information transmission method, comprising:
transmitting, by a first terminal device, first model-related information to a first network device, wherein the first model-related information comprises first information related to an applicable condition of a first model in the first terminal device.

2. The method according to claim 1, wherein the first information comprises one or more of following categories:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

3. The method according to claim 2, wherein the device state comprises a speed of the first terminal device and/or location-related information of the first terminal device.

4. The method according to claim 2 or 3, wherein the device information of the terminal device to which the first model is applicable comprises hardware information and/or software information of the terminal device.

5. The method according to any one of claims 2 to 4, wherein the configuration information comprises one or more of: measurement configuration information, logical area configuration information, or frequency domain resource configuration information.

6. The method according to any one of claims 2 to 5, wherein the device information of the network device to which the first model is applicable comprises hardware information and/or software information of the network device.

7. The method according to any one of claims 1 to 6, wherein one or more categories of information in the first information are character strings.

8. The method according to any one of claims 1 to 7, wherein one or more categories of information in the first information are carried by an information container.

9. The method according to any one of claims 1 to 8, wherein the first model-related information further comprises second information, and the second information comprises one or more of:
an identifier (ID) of the first model;
type information of an input parameter of the first model;
type information of an output parameter of the first model; or
functional information of the first model.

10. The method according to any one of claims 1 to 9, further comprising:
receiving, by the first terminal device, third information transmitted by the first network device; wherein the third information comprises:
one or more model IDs corresponding to the first model-related information requested to be obtained by the first network device; and/or
first indication information, the first indication information being used to request the first terminal device to transmit the first model-related information.

11. The method according to any one of claims 1 to 10, further comprising:
transmitting, by the first terminal device, fourth information to the first network device;
wherein the fourth information comprises one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

12. The method according to any one of claims 1 to 11, further comprising:
receiving, by the first terminal device, third indication information transmitted by the first network device and/or ID information of one or more models of interest to the first network device transmitted by the first network device, wherein the third indication information is used to indicate whether the first terminal device is allowed to transmit the first model-related information.

13. The method according to any one of claims 1 to 12, further comprising:
transmitting, by the first terminal device, capability reporting information to the first network device; wherein the capability reporting information comprises:
whether the first terminal device supports transmitting the first model-related information; and/or
one or more model IDs corresponding to the first model-related information that the first terminal device supports transmitting.

14. An information transmission method, comprising:
receiving, by a first core network device, first model-related information transmitted by a first terminal device; wherein the first model-related information comprises first information related to an applicable condition of a first model in the first terminal device.

15. The method according to claim 14, wherein the first information comprises one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

16. The method according to claim 14 or 15, wherein one or more categories of information in the first information are character strings.

17. The method according to any one of claims 14 to 16, wherein one or more categories of information in the first information are carried by an information container.

18. The method according to any one of claims 14 to 17, further comprising:
transmitting, by the first core network device, second model-related information to a first access network device; wherein the second model-related information comprises a subset of the first model-related information.

19. The method according to any one of claims 14 to 18, further comprising:
transmitting, by the first core network device, third model-related information to a second core network device; wherein the third model-related information comprises a subset of the first model-related information.

20. The method according to any one of claims 14 to 19, wherein the first model-related information further comprises second information, and the second information comprises one or more of:
an identifier (ID) of the first model;
type information of an input parameter of the first model;
type information of an output parameter of the first model; or
functional information of the first model.

21. The method according to any one of claims 14 to 20, further comprising:
transmitting, by the first core network device, third information to the first terminal device;
wherein the third information comprises:
one or more model IDs corresponding to the first model-related information requested to be obtained by the first core network device; and/or
first indication information, the first indication information being used to request the first terminal device to transmit the first model-related information.

22. The method according to any one of claims 14 to 21, further comprising:
receiving, by the first core network device, fourth information transmitted by the first terminal device; wherein the fourth information comprises one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

23. The method according to any one of claims 14 to 22, further comprising:
transmitting, by the first core network device, third indication information and/or ID information of one or more models of interest to the first core network device to the first terminal device, wherein the third indication information is used to indicate whether the first terminal device is allowed to transmit the first model-related information.

24. The method according to any one of claims 14 to 23, further comprising:
receiving, by the first core network device, capability reporting information transmitted by the first terminal device; wherein the capability reporting information comprises:
whether the first terminal device supports transmitting the first model-related information;
and/or
one or more model IDs corresponding to the first model-related information that the first terminal device supports transmitting.

25. An information transmission method, comprising:
receiving, by a first core network device, fourth model-related information transmitted by a second access network device; wherein the fourth model-related information comprises fifth information related to an applicable condition of a second model in a second terminal device.

26. The method according to claim 25, further comprising:
transmitting, by the first core network device, fifth model-related information to a third access network device; wherein the fifth model-related information comprises a subset of the fourth model-related information.

27. The method according to claim 25 or 26, further comprising:
transmitting, by the first core network device, sixth model-related information to a third core network device; wherein the sixth model-related information comprises a subset of the fourth model-related information.

28. An information transmission method, comprising:
receiving, by a fourth access network device, first model-related information transmitted by a first terminal device; wherein the first model-related information comprises first information related to an applicable condition of a first model in the first terminal device.

29. The method according to claim 28, wherein the first information comprises one or more of:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

30. The method according to claim 28 or 29, wherein one or more categories of information in the first information are character strings.

31. The method according to any one of claims 28 to 30, wherein one or more categories of information in the first information are carried by an information container.

32. The method according to any one of claims 28 to 31, further comprising:
transmitting, by the fourth access network device, seventh model-related information to a fourth core network device; wherein the seventh model-related information comprises a subset of the first model-related information.

33. The method according to claim 32, further comprising:
receiving, by the fourth access network device, eighth model-related information transmitted by the fourth core network device; wherein the eighth model-related information comprises a subset of the seventh model-related information.

34. The method according to any one of claims 28 to 33, further comprising:
transmitting, by the fourth access network device, ninth model-related information to a fifth access network device; wherein the ninth model-related information comprises a subset of the first model-related information and/or a subset of the eighth model-related information.

35. The method according to any one of claims 28 to 34, wherein the first model-related information further comprises second information, and the second information comprises one or more of:
an identifier (ID) of the first model;
type information of an input parameter of the first model;
type information of an output parameter of the first model; or
functional information of the first model.

36. The method according to any one of claims 28 to 35, further comprising:
transmitting, by the fourth access network device, third information to the first terminal device; wherein the third information comprises:
one or more model IDs corresponding to the first model-related information requested to be obtained by the fourth access network device; and/or
first indication information, the first indication information being used to request the first terminal device to transmit the first model-related information.

37. The method according to any one of claims 28 to 36, further comprising:
receiving, by the fourth access network device, fourth information transmitted by the first terminal device; wherein the fourth information comprises one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

38. The method according to any one of claims 28 to 37, further comprising:
transmitting, by the fourth access network device, third indication information and/or ID information of one or more models of interest to the fourth access network device to the first terminal device, wherein the third indication information is used to indicate whether the first terminal device is allowed to transmit the first model-related information.

39. The method according to any one of claims 28 to 38, further comprising;
receiving, by the fourth access network device, capability reporting information transmitted by the first terminal device; wherein the capability reporting information comprises:
whether the first terminal device supports transmitting the first model-related information;
and/or
one or more model IDs corresponding to the first model-related information that the first terminal device supports transmitting.

40. An information transmission method, comprising:
receiving, by a fourth access network device, tenth model-related information transmitted by a fifth core network device; wherein the tenth model-related information comprises sixth information related to an applicable condition of a third model in a third terminal device.

41. The method according to claim 40, further comprising:
transmitting, by the fourth access network device, eleventh model-related information to a sixth access network device; wherein the eleventh model-related information comprises a subset of the tenth model-related information.

42. A first terminal device, comprising:
a first communication module, configured to transmit first model-related information to a first network device, wherein the first model-related information comprises first information related to an applicable condition of a first model in the first terminal device.

43. The first terminal device according to claim 42, wherein the first information comprises one or more of following categories:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

44. The first terminal device according to claim 43, wherein the device state comprises a speed of the first terminal device and/or location-related information of the first terminal device.

45. The first terminal device according to claim 43 or 44, wherein the device information of the terminal device to which the first model is applicable comprises hardware information and/or software information of the terminal device.

46. The first terminal device according to any one of claims 43 to 45, wherein the configuration information comprises one or more of: measurement configuration information, logical area configuration information, or frequency domain resource configuration information.

47. The first terminal device according to any one of claims 43 to 46, wherein the device information of the network device to which the first model is applicable comprises hardware information and/or software information of the network device.

48. The first terminal device according to any one of claims 42 to 47, wherein one or more categories of information in the first information are character strings.

49. The first terminal device according to any one of claims 42 to 48, wherein one or more categories of information in the first information are carried by an information container.

50. The first terminal device according to any one of claims 42 to 49, wherein the first model-related information further comprises second information, and the second information comprises one or more of:
an identifier (ID) of the first model;
type information of an input parameter of the first model;
type information of an output parameter of the first model; or
functional information of the first model.

51. The first terminal device according to any one of claims 42 to 50, wherein the first communication module is further configured to receive third information transmitted by the first network device; and the third information comprises:
one or more model IDs corresponding to the first model-related information requested to be obtained by the first network device; and/or
first indication information, the first indication information being used to request the first terminal device to transmit the first model-related information.

52. The first terminal device according to any one of claims 42 to 51, wherein the first communication module is further configured to transmit fourth information to the first network device; and the fourth information comprises one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

53. The first terminal device according to any one of claims 42 to 52, wherein the first communication module is further configured to receive third indication information transmitted by the first network device and/or ID information of one or more models of interest to the first network device transmitted by the first network device, and the third indication information is used to indicate whether the first terminal device is allowed to transmit the first model-related information.

54. The first terminal device according to any one of claims 42 to 53, wherein the first communication module is further configured to transmit capability reporting information to the first network device; and the capability reporting information comprises:
whether the first terminal device supports transmitting the first model-related information;
and/or
one or more model IDs corresponding to the first model-related information that the first terminal device supports transmitting.

55. A first core network device, comprising:
a second communication module, configured to receive first model-related information transmitted by a first terminal device; wherein the first model-related information comprises first information related to an applicable condition of a first model in the first terminal device.

56. The first core network device according to claim 55, wherein the first information comprises one or more of following categories:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

57. The first core network device according to claim 55 or 56, wherein one or more categories of information in the first information are character strings.

58. The first core network device according to any one of claims 55 to 57, wherein one or more categories of information in the first information are carried by an information container.

59. The first core network device according to any one of claims 55 to 58, wherein the second communication module is further configured to:
transmit second model-related information to a first access network device; and the second model-related information comprises a subset of the first model-related information.

60. The first core network device according to any one of claims 55 to 59, wherein the second communication module is further configured to:
transmit third model-related information to a second core network device; and the third model-related information comprises a subset of the first model-related information.

61. The method according to any one of claims 55 to 60, wherein the first model-related information further comprises second information, and the second information comprises one or more of:
an identifier (ID) of the first model;
type information of an input parameter of the first model;
type information of an output parameter of the first model; or
functional information of the first model.

62. The method according to any one of claims 55 to 61, wherein the second communication module is further configured to transmit third information to the first terminal device; and the third information comprises:
one or more model IDs corresponding to the first model-related information requested to be obtained by the first core network device; and/or
first indication information, the first indication information being used to request the first terminal device to transmit the first model-related information.

63. The method according to any one of claims 55 to 62, wherein the second communication module is further configured to receive fourth information transmitted by the first terminal device; and the fourth information comprises one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

64. The method according to any one of claims 55 to 63, wherein the second communication module is further configured to transmit third indication information and/or ID information of one or more models of interest to the first core network device to the first terminal device, and the third indication information is used to indicate whether the first terminal device is allowed to transmit the first model-related information.

65. The method according to any one of claims 55 to 64, wherein the second communication module is further configured to receive capability reporting information transmitted by the first terminal device; and the capability reporting information comprises:
whether the first terminal device supports transmitting the first model-related information;
and/or
one or more model IDs corresponding to the first model-related information that the first terminal device supports transmitting.

66. A first core network device, comprising:
a third communication module, configured to receive fourth model-related information transmitted by a second access network device; wherein the fourth model-related information comprises fifth information related to an applicable condition of a second model in a second terminal device.

67. The first core network device according to claim 66, wherein the third communication module is further configured to:
transmit fifth model-related information to a third access network device; and the fifth model-related information comprises a subset of the fourth model-related information.

68. The first core network device according to claim 66 or 67, wherein the third communication module is further configured to:
transmit sixth model-related information to a third core network device; and the sixth model-related information comprises a subset of the fourth model-related information.

69. A fourth access network device, comprising:
a fourth communication module, configured to receive first model-related information transmitted by a first terminal device; wherein the first model-related information comprises first information related to an applicable condition of a first model in the first terminal device.

70. The fourth access network device according to claim 69, wherein the first information comprises one or more of following categories:
a device state to which the first model is applicable;
device information of a terminal device to which the first model is applicable;
applicable condition information related to an implementation of the first model;
configuration information to which the first model is applicable;
device information of a network device to which the first model is applicable;
network deployment information to which the first model is applicable; or
input data requirement information to which the first model is applicable.

71. The fourth access network device according to claim 69 or 70, wherein one or more categories of information in the first information are character strings.

72. The fourth access network device according to any one of claims 69 to 71, wherein one or more categories of information in the first information are carried by an information container.

73. The fourth access network device according to any one of claims 69 to 72, wherein the fourth communication module is further configured to:
transmit seventh model-related information to a fourth core network device; and the seventh model-related information comprises a subset of the first model-related information.

74. The fourth access network device according to claim 73, wherein the fourth communication module is further configured to:
receive eighth model-related information transmitted by the fourth core network device; and the eighth model-related information comprises a subset of the seventh model-related information.

75. The fourth access network device according to any one of claims 69 to 74, wherein the fourth communication module is further configured to:
transmit ninth model-related information to a fifth access network device; and the ninth model-related information comprises a subset of the first model-related information and/or a subset of the eighth model-related information.

76. The method according to any one of claims 69 to 75, wherein the first model-related information further comprises second information, and the second information comprises one or more of:
an identifier (ID) of the first model;
type information of an input parameter of the first model;
type information of an output parameter of the first model; or
functional information of the first model.

77. The method according to any one of claims 69 to 76, wherein the fourth communication module is further configured to transmit third information to the first terminal device; and the third information comprises:
one or more model IDs corresponding to the first model-related information requested to be obtained by the fourth access network device; and/or
first indication information, the first indication information being used to request the first terminal device to transmit the first model-related information.

78. The method according to any one of claims 69 to 77, wherein the fourth communication module is further configured to receive fourth information transmitted by the first terminal device; and the fourth information comprises one or more of:
one or more model IDs stored by the first terminal device;
one or more model IDs updated by the first terminal device; or
second indication information, the second indication information being used to indicate that the first terminal device contains first model-related information to be reported, or that the first model-related information has been updated.

79. The method according to any one of claims 69 to 78, wherein the fourth communication module is further configured to transmit third indication information and/or ID information of one or more models of interest to the fourth access network device to the first terminal device, and the third indication information is used to indicate whether the first terminal device is allowed to transmit the first model-related information.

80. The method according to any one of claims 69 to 79, wherein the fourth communication module is further configured to receive capability reporting information transmitted by the first terminal device; and the capability reporting information comprises:
whether the first terminal device supports transmitting the first model-related information;
and/or
one or more model IDs corresponding to the first model-related information that the first terminal device supports transmitting.

81. A fourth access network device, comprising:
a fifth communication module, configured to receive tenth model-related information transmitted by a fifth core network device; wherein the tenth model-related information comprises sixth information related to an applicable condition of a third model in a third terminal device.

82. The fourth access network device according to claim 81, wherein the fifth communication module is further configured to:
transmit eleventh model-related information to a sixth access network device; wherein the eleventh model-related information comprises a subset of the tenth model-related information.

83. A first terminal device, comprising: a transceiver, a processor and a memory, wherein the memory is configured to store a computer program, the transceiver is configured to communicate with other devices, and the processor is configured to call the computer program stored in the memory and run the computer program, to cause the first terminal device to perform the method according to any one of claims 1 to 13.

84. A first core network device, comprising: a transceiver, a processor and a memory, wherein the memory is configured to store a computer program, the transceiver is configured to communicate with other devices, and the processor is configured to call the computer program stored in the memory and run the computer program, to cause the first core network device to perform the method according to any one of claims 14 to 27.

85. A fourth access network device, comprising: a transceiver, a processor and a memory, wherein the memory is configured to store a computer program, the transceiver is configured to communicate with other devices, and the processor is configured to call the computer program stored in the memory and run the computer program, to cause the fourth access network device to perform the method according to any one of claims 28 to 41.

86. A chip, comprising: a processor, configured to call a computer program from a memory and run the computer program, to cause a device equipped with the chip to perform the method according to any one of claims 1 to 13.

87. A chip, comprising: a processor, configured to call a computer program from a memory and run the computer program, to cause a device equipped with the chip to perform the method according to any one of claims 14 to 27.

88. A chip, comprising: a processor, configured to call a computer program from a memory and run the computer program, to cause a device equipped with the chip to perform the method according to any one of claims 28 to 41.

89. A computer-readable storage medium, configured to store a computer program, wherein the computer program, when executed by a device, causes the device to perform the method according to any one of claims 1 to 13.

90. A computer-readable storage medium, configured to store a computer program, wherein the computer program, when executed by a device, causes the device to perform the method according to any one of claims 14 to 27.

91. A computer-readable storage medium, configured to store a computer program, wherein the computer program, when executed by a device, causes the device to perform the method according to any one of claims 28 to 41.

92. A computer program product, comprising computer program instructions, wherein the computer program instructions cause a computer to perform the method according to any one of claims 1 to 13.

93. A computer program product, comprising computer program instructions, wherein the computer program instructions cause a computer to perform the method according to any one of claims 14 to 27.

94. A computer program product, comprising computer program instructions, wherein the computer program instructions cause a computer to perform the method according to any one of claims 28 to 41.

95. A computer program, wherein the computer program enables a computer to perform the method according to any one of claims 1 to 13.

96. A computer program, wherein the computer program enables a computer to perform the method according to any one of claims 14 to 27.

97. A computer program, wherein the computer program enables a computer to perform the method according to any one of claims 28 to 41.

98. A communication system, comprising: a first terminal device and a first network device;
wherein the first terminal device is configured to perform the method according to any one of claims 1 to 13;
wherein the first network device comprises a first core network device and/or a fourth access network device;
the first core network device is configured to perform the method according to any one of claims 14 to 27; and the fourth access network device is configured to perform the method according to any one of claims 28 to 41.
